**Europäisches Patentamt**

**European Patent Office**

**Office européen des brevets**

(11) Veröffentlichungsnummer: **0 141 310**
**B1**

(12) ## EUROPÄISCHE PATENTSCHRIFT

(45) Veröffentlichungstag der Patentschrift:
06.03.89

(51) Int. Cl.⁴: **C 08 J 5/18**

(21) Anmeldenummer: **84112107.2**

(22) Anmeldetag: **10.10.84**

(54) Gefüllte Polycarbonatfolien, ihre Herstellung und Verwendung.

(30) Priorität: 22.10.83 DE 3338499
17.11.83 DE 3341557

(43) Veröffentlichungstag der Anmeldung:
15.05.85 Patentblatt 85/20

(45) Bekanntmachung des Hinweises auf die Patenterteilung:
06.03.89 Patentblatt 89/10

(84) Benannte Vertragsstaaten:
DE FR GB IT

(56) Entgegenhaltungen:
BE-A-720 314
NL-B-129 962

Die Akte enthält technische Angaben, die nach
dem Eingang der Anmeldung eingereicht wurden
und die nicht in dieser Patentschrift enthalten sind.

(73) Patentinhaber: BAYER AG, Konzernverwaltung RP
Patentabteilung, D-5090 Leverkusen 1 Bayerwerk
(DE)

(72) Erfinder: Schulte, Bernhard, Dr., Südwall 80 a,
D-4150 Krefeld (DE)
Erfinder: Tischer, Werner, D. I., Am Norfbach 9,
D-4047 Dormagen (DE)
Erfinder: Waldenrath, Werner, D. I., Maastrichter
Strasse 40, D-5000 Köln 1 (DE)
Erfinder: Kaloff, Hans, Dr., Lessingstrasse 12,
D-4047 Dormagen 5 (DE)

Anmerkung: Innerhalb von neun Monaten nach der Bekanntmachung des Hinweises auf die Erteilung des europäischen Patents im
Europäischen Patentblatt kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr entrichtet worden
ist (Art. 99(1) Europäisches Patentübereinkommen).

EP 0 141 310 B1

LIBER, STOCKHOLM 1989

**Beschreibung**

Gegenstand der Erfindung ist ein Verfahren zur Herstellung von Polycarbonatfolien mit einer Dicke von 0,002 mm bis 0,4 mm, mit einem Gehalt an Ruß oder Graphit, insbesondere von Ruß, von 10 bis 40 Gew.-%, und insbesondere von 20 bis 35 Gew.-%, dadurch gekennzeichnet, daß man in Lösungen von thermoplastischen, aromatischen Polycarbonaten mit M̅w (Gewichtsmittelmolekulargewicht) von 20 000 bis 300 000 entsprechende Mengen an Ruß oder Graphit, vorzugsweise an Ruß, dispergiert und in bekannter Weise Gießfolien einer Dicke von 0,004 mm bis 0,42 mm, vorzugsweise von 0,006 mm bis 0,3 mm und insbesondere von 0,01 mm bis 0,2 mm herstellt und diese danach mono- oder biaxial um mindestens 5 % bis maximal 250 %, vorzugsweise um 10 % bis 200 % nach bekannten Verfahren reckt.

Gegenstand der vorliegenden Erfindung sind außerdem die nach dem erfindungsgemäßen Verfahren erhältlichen Polycarbonatfolien. Die nach dem erfindungsgemäßen Verfahren erhältlichen Polycarbonatfolien haben einen spezifischen Oberflächenwiderstand von 1 bis $10^9$ Ω, vorzugsweise von 5 bis $10^6$ Ω und insbesondere von 10 bis $10^3$ Ω.

Die erfindungsgemäß erhältlichen Polycarbonatfolien lassen sich auf dem Elektrosektor, insbesondere zum Schutz von elektrischen Bauteilen gegen statische Aufladungen, zur Abschirmung elektromagnetischer Strahlung und zur Widerstandsheizung bei elektrischen Bauteilen verwenden.

Das Recken von Polycarbonatfolien ist im Prinzip bekannt. (Siehe beispielsweise DE-AS-1 179 355, DE-AS-1 164 644, DE-AS-1 190 167, US-PS-3 005 236, DE-AS-1 1 435 459 und DE-AS-1 255 912).

Das Recken von umgefüllten Polycarbonatgießfolien ist auch aus NL-C-129 962 bekannt, doch führt dies zu einer Abnahme der Reißdehnung dieser Folien.

Polycarbonatfolien mit hohen Gehalten an leitfähigem Material wie beispielsweise Ruß sind bereits beschrieben (siehe BE-PS-720 314, US-PS-3 654 187, US-Patent 3 697 450 und JP-A-53 082 413), doch werden derartige Filme allein nach einem Gießverfahren hergestellt (siehe BE-PS bzw. US-Patente).

Bekannt sind auch Polycarbonate mit geringen Mengen an Kohlenstoffasern oder Graphitfasern, die ebenfalls zu Folien verarbeitet werden können, jedoch erfolgt dies wiederum nur nach einem Gießverfahren. (Siehe EP-OS-0 032 379).

Überraschend wurde nun gefunden, daß mit Ruß oder Graphit gefüllte Polycarbonatfolien, die man nach bekannten Gießverfahren herstellt und anschließend nach bekannten Verfahren reckt, ein besonders gutes Eigenschaftsbild bezüglich elektrischer und mechanischer Eigenschaften aufweisen, nämlich einmal sehr gleichmäßige, spezifische Oberflächenwiderstände, d. h. geringe Standardabweichungen des spezifischen Oberflächenwiderstandes (gemessen in Ω) bzw. spezifischen Durchgangswiderstandes (gemessen in Ω cm) über große Flächen, zum anderen geringe Veränderungen der spezifischen Widerstände mit der Lagerzeit, außerdem geringe Dickenschwankungen, hohe Oberflächenglätte, gutes Schrumpfverhalten, sehr niedrige Lösungsmittelrestgehalte ohne zusätzliche separate Nachtrocknung und schließlich hohe Reißdehnung und Reißfestigkeit.

Die erfindungsgemäß hergestellten Polycarbonatfolien sind damit bislang bekannten, ungereckten Polycarbonatgießfolien gleicher Dicke und gleichen Füllstoffgehaltes überlegen, was vor allem im Hinblick auf Reißdehnung und Reißfestigkeit einerseits und Lagerzeitverhalten des spezifischem Oberflächenwiderstands andererseits für viele Verwendungen von entscheidendem Vorteil ist.

Es war für den Fachmann nicht zu erwarten, daß vor allem bei Füllstoffgehalten von 10 und mehr Gewichtsprozent die Reckung zu Folien guter und reproduzierbarer Qualität, insbesondere im Bereich sehr geringer Foliendicken von beispielsweise unter 0,05 mm, führt, wobei besonders unerwartet ist, daß die Reißdehnung der gefüllten Polycarbonatfolien durch die Reckung verbessert wird, während die Reckung von entsprechenden ungefüllten Polycarbonatfolien eine Verringerung der Reißdehnung verursacht.

Thermoplastische aromatische Polycarbonate im Sinne der vorliegenden Erfindung sind die durch Umsetzung von Diphenolen, insbesondere von Dihydroxydiarylalkanen, mit Phosgen oder Diestern der Kohlensäure erhältlichen Polykondensate, wobei außer den unsubstituierten Dihydroxydiarylalkanen auch solche geeignet sind, deren Arylreste in o- und/oder m-Stellung zur Hydroxylgruppe Methylgruppen oder Halogenatome tragen.

Geeignete Diphenole sind z. B. Hydrochinon, Resorcin, 4,4'-Dihydroxydiphenyl, Bis-(hydroxy-phenyl)-alkane wie beispielsweise $C_1$-$C_8$-Alkylen- bzw. $C_2$-$C_8$-Alkylidenbisphenole, Bis-(hydroxy-phenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone, ferner α, α'-Bis-(hydroxyphenyl)-diisopropylbenzol sowie die entsprechenden kernalkylierten bzw. kernhalogenierten Verbindungen. Bevorzugt sind Polycarbonate auf Basis Bis-(4-hydroxyphenyl)-propan-2,2 (Bisphenol A), Bis-(4-hydroxy-3,5-dichlor-phenyl)-propan-2,2 (Tetrachlorbisphenol A), Bis-(4-hydroxy-3,5-dibromphenyl)-propan-2,2 (Tetrabrombisphenol A), Bis-(4-hydroxy-3,5-dimethyl-phenyl)-propan-2,2 (Tetramethylbisphenol A), Bis-(4-hydroxy-phenyl)-cyclohexan-1,1 (Bisphenol Z) sowie auf Basis von Dreikernbisphenolen wie α, α'-Bis-(4-hydroxyphenyl)-p-di-isopropylbenzol. Weitere für die Herstellung der Polycarbonate geeignete Diphenole sind beispielsweise in den US-Patenten 3 028 365, 3 062 781 und 3 275 601 beschrieben.

Außer linearen Polycarbonaten sind auch verzweigte Polycarbonate geeignet; derartige verzweigte Polycarbonate sind bekanntlich durch den Einbau geringer Mengen, vorzugsweise von Mengen zwischen 0,05 und 2,0 Mol-%, bezogen auf eingesetzte Diphenole, an drei oder mehr als dreifunktionellen Verbindungen, beispielsweise solchen mit drei oder mehr als drei phenolischen Hydroxygruppen herstellbar (siehe dazu beispielsweise DE-OS-1 570 533, DE-OS-1 595 762 und DE-OS-2 500 092). Einige der verwendbaren Verbindungen mit drei oder mehr als drei phenolischen Hydroxygruppen sind beispielsweise 1,3,5-Tri-(4-hydroxyphenyl)-benzol, 1,1,1-Tri-(4-hydroxyphenyl)-ethan, 2,4-Bis-(4-hydroxyphenyl-isopropyl)-phenol, 2-(4-Hydroxyphenyl)-2-(2,4-dihydroxyphenyl)-propan, Hexa-(4-(4-hydroxyphenylisopropyl)phenyl)-ortho-terephthalsäureester, Tetra-(4-hydroxyphenyl)-methan, Tetra-(4-(4-hydroxyphenylisopropyl)-phenoxy)-methan und 1,4-Bis-(4'-4''-dihydroxytriphenyl)-methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol.

Bevorzugte Polycarbonate sind solche aus Bisphenol-A, welche von 0 bis 5 Mol-%, bezogen auf Mole an Diphenolen, Bisphenol-Z einkondensiert enthalten.

Die erfindungsgemäß geeigneten Polycarbonate sollen mittlere Molekulargewichte $\bar{M}w$ (Gewichtsmittel) haben, die sich aus relativen Viskositäten von 1,2 bis 3,0, vorzugsweise 1,5 bis 2,5 und insbesondere 1,6 bis 2,4 ergeben. (Die relativen Viskositäten sind in bekannter Weise an 0,5 g/100ml $CH_2Cl_2$-Lösungen bei 25°C gemessen). Daraus resultieren $\bar{M}w$-Werte zwischen etwa 20 000 und etwa 300 000, vorzugsweise zwischen etwa 40 000 und 250 000 und insbesondere zwischen 60 000 und 200 000. (GPC-Molekulargewichtsbestimmung).

Die Herstellung der erfindungsgemäß geeigneten Polycarbonate erfolgt nach den bekannten Verfahren. Die Einstellung des Molekulargewichts erfolgt in bekannter Weise mit Kettenabbrechern wie Phenol, Halogenphenolen oder Alkylphenolen in den bekannten Mengen.

Erfindungsgemäß geeignete Ruße sind Gasruße, Furnace-Ruße oder Flammruße mit mittleren Primärpartikelgrößen, die im allgemeinen elektronenmikroskopisch ermittelt werden, von unter 200 Nanometer (nm), vorzugsweise unter 100 Nanometer (nm) und insbesondere mit einer mittleren Primärteilchengröße von kleiner als 50 Nanometer; erfindungsgemäß geeignete Graphite sind Graphitpulver oder Graphitstäube, die beispielsweise als Elektrodengraphit in einem breiten Kornspektrum mit Partikeldurchmessern bis zu 5 mm zur Verfügung stehen, wobei Graphitpulver mit mittleren Teilchengrößen bis zu 1 mm bevorzugt und insbesondere bis zu 0,5 mm verwendet werden, wobei die Graphitpartikel in der nachfolgend beschriebenen Weise in der Polycarbonatlösung weiter zerkleinert und feinstdispergiert werden.

Bevorzugt werden bekannte, sog. Leitfähigkeitsruße verwendet, die außer einer sehr geringen Primärteilchengröße eine große äußere und innere Oberfläche, d. h. hohe Porosität und somit hohe BET-Oberflächen bei der $N_2$-Adsorption und hohe Dibutylphthalat (DBP)-Adsorptionswerte aufweisen und weiterhin hochstrukturiert sind, d.h. starke Agglomerationen oder Aggregationen von einzelnen Rußteilchen zu größeren Gebilden wie z. B. Ketten aufweisen, wobei die BET-Oberflächen der Ruße im allgemeinen größer sind als 20 $m^2/g$ und die DBP-Adsorption oberhalb von 40 ml pro 100 g Ruß liegen.

Insbesondere geeignet sind Leitfähigkeitsruße mit BET-Oberflächen von über 50 $m^2/g$ und DBP-Adsorptionen von größer als 80 ml/100 g bei mittleren Primärpartikelgrößen von unter 50 Nanometer (nm). Derartige elektrisch leitfähige Ruße sind als handelsübliche Spezialruße mit ausgeprägten Strukturen und hohen elektrischen Leitfähigkeiten verfügbar.

Die Einarbeitung von Ruß oder Graphit in die thermoplastischen Polycarbonate erfolgt über Lösungen von Polycarbonaten, entweder direkt nach Abschluß des Herstellungsprozesses des Polycarbonates in die Reaktionslösungen oder nach erfolgter Isolierung des Polycarbonats in die separat hergestellten Polycarbonatlösungen, wobei die elektrisch leitfähigen Additive sowohl zunächst allein in geeigneten Medien vor dem Lösen der Polycarbonate dispergiert oder vorzerkleinert als auch in Gegenwart des gelösten Polycarbonats eingearbeitet und feinstdispergiert werden können. Es können auch beide Möglichkeiten kombiniert werden, wobei dann mit Vorteil eine stufenweise Feinstdispergierung unter Verwendung bekannter Dispergiereinrichtungen, wie z. B. Rotor-Stator Apparate, Dissolver-Scheiben, Hochdruckhomogenisatoren, Ultra-Schallsonatoren oder Perlmühlen mit z. B. Stahlkugeln von 0,5 bis 3 mm Durchmesser erreicht wird.

Geeignete Medien für die Herstellung der Dispersionen sind chlorierte Kohlenwasserstoffe wie beispielsweise Methylenchlorid, Ethylenchlorid, Chloroform oder Chlorbenzol, wobei allerdings auch Zusätze von beispielsweise Methanol, Ethanol, Aceton, Toluol, Xylol, Ethylenglykol und seinen Mono- oder Diethern, Propylenglykol und seinen Ethern, Glyzerin, Laurylalkohol und seinen Ethern und Estern oder Phthalsäureestern mitverwendet werden können, wobei solche Zusätze wie beispielsweise Toluol oder Ether des Propylenglykols oder Ethylenglykols bevorzugt sind, die zu Erhöhung der Kristallinität des Polycarbonats bei der Gießfolienherstellung dienen.

Die so herstellbaren Dispersionen in den vorstehend genannten organischen Medien, die im allgemeinen Feststoffgehalte an Polycarbonat und Ruß beziehungsweise Polycarbonat und Graphit von 4 bis 25 Gew.-% vorzugsweise von 6 bis 18 Gew.-% enthalten, werden meist noch einer Feinfiltration mit mittleren Maschenweiten von unter 100 μm, vorzugsweise von unter 50 μm unterworfen, um Teilchenagglomerate zu entfernen.

Bei Verwendung von Ruß haben die so filtrierten Dispersionen im allgemeinen nur noch Teilchengrößen von weniger als 10 μm (Messung mittels Ultrazentrifuge oder Laserbeugung), vorzugsweise von weniger als 5 μm und im Idealfall von weniger als 2 μm.

Das Vergießen der Dispersionen zu Filmdicken von 0,004 bis 0,42 mm, vorzugsweise 0,006 bis 0,3 mm und insbesondere von 0,01 bis 0,2 mm kann auf Band- oder Trommelgießmaschinen mit bekannten Gießern wie Abstreif- oder Druckgießern erfolgen, wobei die hergestellten Polycarbonatfilme einen Füllungsgrad von 5 bis 45 Gew.-%, vorzugsweise 10 bis 40 Gew.-% und insbesondere 20 bis 35 Gew.-% (bezogen auf Gesamtfeststoff) besitzen und einen Lösungsmittelgehalt von 0,2 bis 12 Gew.-% (VDE 0345), vorzugsweise 0,5 bis 8 Gew.-%, der auch durch Vortrocknung vor dem nachfolgenden Reckprozess gezielt eingestellt werden kann, aufweisen.

Diese gefüllten Polycarbonat-Gießfolien werden auf technischen Reckeinrichtungen mono- oder biaxial verstreckt, wobei das monoaxiale Verstrecken in Längsrichtung, d. h. in Gießrichtung des Gießfilms bevorzugt ist. Dazu sind bekannte technische, mit temperierbaren Walzen ausgerüstete Reckmaschinen, z. B. der Fa. Hofmann und Schwabe oder Kampf geeignet, wobei das Verstrecken in einer Einspaltreckung, d. h. zwischen einer beheizten Walze (1) mit der Einlaufgeschwindigkeit $V_1$ und einer beheizten Walze (2) mit der höshsten Temperatur, der sogenannten Recktemperatur, die im allgemeinen durch Ölbeheizung erreicht wird, und einer Auslaufgeschwindigkeit $V_2$ in einem Spalt von ca. 3 bis 10 mm Breite unter Variation des Reckverhältnisses $V_1$ : $V_2$ von 1 : 1,05 bis 1 : 3,5, vorzugsweise von 1 : 1,1 bis 1 : 3,0 und insbesondere von 1 : 1,2 bis 1 : 2,5 durchgeführt wird. Im allgemeinen ist eine dritte Walze mit niedrigerer Temperatur als der Recktemperatur zur Thermofixierung nachgeschaltet.

Ebenso kann der Reckprozess in einer Mehrspaltstreckung durchgeführt werden, wobei Reckmaschinen mit mehreren angetriebenen Walzen unterschiedlicher Geschwindigkeit und Temperatur verwendet werden und innerhalb der Verstreckzonen nicht angetriebene beheizte Walzen zur Vergleichmäßigung des Reckprozesses eingesetzt werden. Der Durchmesser der Walzen kann von z. B. 40 bis 300 mm variiert werden, wobei im allgemeinen die Oberfläche der Reckwalzen durch Strahlen aufgerauht ist oder Kunststoff- oder Keramikbeschichtete Walzen zur besseren Haftung verwendet werden. Die Temperatur der am höchsten beheizten Reckwalze wird als sogenannte Recktemperatur $T_R$ bezeichnet, die im Bereich von 170 bis 250° C, vorzugsweise von 180 bis 230°C variiert wird.

Die Verwendung der erfindungsgemäß erhältlichen Polycarbonatfilme erfolgt, wie bereits eingangs erwähnt auf dem Elektrosektor, beispielsweise zur Verpackung und somit zum Schutz von MOS-Transistoren oder bipolaren Halbleitern gegenüber statischen Entladungen. Die erfindungsgemäß erhältlichen Polycarbonatfilme sind somit für Ausrüstungen geeignet, die digitale Displays enthalten, wie z. B. digitale elektronische Bauteile in Kraftfahrzeugen, in Spielzeug, Rechnern, Uhren, usw. Weiterhin können die erfindungsgemäß erhältlichen Polycarbonatfilme für Verpackungen in der Photographie oder zum Umhüllen von Kabeln, wie etwa Hochspannungskabel oder Kraftfahrzeugzündkabeln, oder von Rohrleitungen, die nicht einfrieren dürfen, eingesetzt werden.

In besonderen Anwendungen zeigen die erfindungsgemäß erhältlichen Polycarbonatfilme infolge ihrer geringen Oberflächenrauhigkeiten und sehr geringen Restlösungsmittelgehalte Vorteile beim Metallisieren, z. B. mit Nickel, Kobalt, Aluminium usw., was durch Aufdampfen oder auf chemischem Wege erreicht wird.

Mit Vorteil können die erfindungsgemäß erhältlichen Polycarbonatfolien direkt zum Umhüllen von elektrischen Bauteilen eingesetzt werden, die dann unter Thermobehandlung in bekannter Weise fest aufgeschrumpft werden können.

Die in folgenden Ausführungsbeispielen angegebenen Oberflächenwiderstände wurden mit dem Gerät FPP 5000 der Fa. VEECO bei Raumtemperatur (20 - 25°C) gemessen und die Dimension ist $\Omega$ per square bzw. $\Omega$ /sq, wobei sich diese Werte kaum von den nach DIN 53 482 erhaltenen spezifischen Oberflächenwiderständen, gemessen in $\Omega$, unterscheiden.

**Beispiel 1**

Eine Lösung eines Copolycarbonats aus 2,2-Bis-(4-hydroxyphenyl)-propan (99,5 Mol-%) und 1,1-Bis-(4-hydroxyphenyl)-cyclohexan (0,5 Mol-%) einer relativen Viskosität von 2,16 (gemessen an 5 g pro l $CH_2Cl_2$ bei 25°C) in $CH_2Cl_2$, die 27 Gew.-% des Gesamtfeststoffs an feinstdispergiertem Leitfähigkeitsruß mit einer mittleren Primärteilchengröße von 30 Nanometer (nm), einer BET-Oberfläche von 254 $m^2/g$ und einer DBP-Adsorption von 178 ml/100 g enthält, wird über Filtergewebe mit einer mittleren Maschenweite von 50 μm filtriert und zu elektrisch leitfähigen Polycarbonatfolien mit Dicken von ca. 40 μm, ca. 60 μm und 80 μm auf einer Trommelgießmaschine vergossen.

Die ca. 60 μm bzw. 80 μm dicken rußgefüllten Polycarbonatfilme werden mit einem Restlösungsmittelgehalt von 3,0 % (60 μm) bzw. von 4,1 % (80 μm) Gewichtsverlust nach VDE 0345 auf einer Hofmann und Schwabe Reckmaschine mit drei Walzen bei einer Recktemperatur von $T_R$ = 220°C, d. h. der Temperatur der am höchsten beheizten mittleren Walze, in einer Einspaltstreckung durch Variation der Einlauf-($V_1$) - und Auslaufgeschwindigkeit ($V_2$) bei einem Reckverhältnis von $V_1$ : $V_2$ = 1 : 1,5 (II) bzw. 1 : 2,0 (III) monoaxial verstreckt.

Im Vergleich zu der ungereckten 40 μm dicken Folie (I) werden die in der Tabelle 1 angegebenen mechanischen Festigkeiten nach DIN 53 455 (200 mm/min Vorschub) bei gleicher Filmdicke und Zusammensetzung gemessen.

**Tabelle 1**

| Probe | I<br>Vergleich | II<br>Anfangsfilmdicke ca.<br>60 μm | III<br>Anfangsfilmdicke ca.<br>80 μm |
|---|---|---|---|
| Probendicke (μm) | 38 - 40 | 37 - 40 | 41 |
| Recktemperatur (°C) | - | 220 | 220 |
| Reckverhältnis ($V_1$ : $V_2$) | ungereckt | 1 : 1,5 | 1 : 2,0 |
| Restlösungsmittelgehalt (% VDE 0345) | 1,3* | 1,2 | 1,4 |
| Reißdehnung (%) | 18 | 54 | 49 |
| Reißfestigkeit (N/mm$^2$) | 72,1 | 91,5 | 100,3 |
| Oberflächenwiderstand (Ω/sq, Vierpunktmessung, FPP 5000 der Fa. VEECO bei Raumtemperatur 20 - 25°C) | 220 | 480 | 470 |

*) nach Vortrocknung der Vergleichsfolie in einem Umlufttrockenschrank

Die gereckten elektrisch leitenden Polycarbonatfilme mit Oberflächenwiderständen von kleiner als 500 Ω/sq zeigen im Vergleich zu dem ungereckten Film um mehr als das Doppelte gesteigerte Dehnungswerte und ebenso höhere Reißfestigkeiten bei gleicher Filmdicke von ca. 40 μm.

**Beispiel 2**

Die nach Beispiel 1 hergestellte ca. 60 μm dicke Ruß/Polycarbonatfolie wird monoaxial in einer Einspaltstreckung bei 220°C bei verschiedenen Reckverhältnissen ($V_1$ : $V_2$) verstreckt, wobei die bei einer Reckrate von 1 : 1,9 erhaltene ca. 30 μm dicke Folie mit einer ungereckten Folie mit gleichem Rußfüllungsgrad und gleicher Dicke (ca. 30 μm) in ihren mechanischen Eigenschaften nach DIN 53 455 (200 mm/min Vorschub) verglichen wird (Tab. 2).

**Tabelle 2**

Mechanische Festigkeiten und Oberflächenwiderstände gereckter rußhaltiger Polycarbonatfilme bei einer Anfangsfilmdicke von 56 - 60 μm. Recktemperatur 220°C.

| Reckverhältnis ($V_1$:$V_2$) | 1 : 1,25 | 1 : 1,33 | 1 : 1,6 | 1 : 1,9 | Vergleich<br>ungereckt | 1 : 2,5 |
|---|---|---|---|---|---|---|
| Probendicke (μm) | 46 - 48 | 42 - 44 | 36 | 31 | 28 - 30 | 25 |
| Restlösungsmittelgehalt (% nach VDE 0345) | 1,6 | 1,3 | 1,15 | 1,1 | 1,3* | 1,0 |
| Reißdehnung (%) | 51 | 58 | 60 | 48 | 18 | 31** |
| Reißfestigkeit (N/mm$^2$) | 77,5 | 84,3 | 98,5 | 97,7 | 72 | 141** |
| Oberflächenwiderstand (Ω/sq; VEECO-Messung) | 260 | 325 | 500 | 670 | ca. 300 | 3220 |

*) nach Vortrocknung der Vergleichsfolie im Umlufttrockenschrank
**) bei 50 mm/min Vorschubgeschwindigkeit (DIN 53 455); übrige Werte bei 200 mm/min Vorschubgeschwindigkeit gemessen.

Die Ergebnisse in Tabelle 2 zeigen die eindeutige Verbesserung der mechanischen Festigkeiten einer gereckten rußgefüllten Polycarbonatfolie mit hohem Ruß-Füllungsgrad der Polymermatrix (größer als 25 Gew.-%) im Vergleich zu der nicht verstreckten Vergleichsprobe gleicher Zusammensetzung bei einer Filmdicke von 30 μm.

Weiterhin wird der Einfluß des Verstreckverhältnisses auf den Oberflächenwiderstand deutlich, der bei einem Reckverhältnis bis ca. 1 : 2 im Bereich unter 1000 Ω/sq variiert werden kann und bei einem Reckverhältnis von z. B. über 1 : 2,0 auf über 1000 ansteigt. Somit können, unabhängig von einer neuen stofflichen Zusammensetzung der gefüllten Polycarbonatfolie, aus einer vorgegebenen Folie durch Variation des Reckverhältnisses unterschiedliche Polycarbonatfilme mit verschiedenen Oberflächenwiderständen hergestellt werden.

**Beispiel 3**

Eine durch Feinstdispergierung erhaltene Ruß/Polycarbonat/ Methylenchlorid-Dispersion (Bisphenol A - Polycarbonat mit einem membranosmometrisch ermittelten Molekulargewicht von $M_n$ = 49000), mit einem Rußgehalt von 25 Gew.-% des gleichen Leitfähigkeitsrußes wie in Beispiel 1 angegeben, bezogen auf Gesamtgewicht der Feststoffe Polycarbonat + Ruß, wird mit einer Viskosität von 8500 mPas (20°C) über ein Spaltfilter mit mittleren Spaltabständen von 30 µm filtriert und dann auf einer Trommelgießmaschine zu einer 150 µm dicken rußhaltigen Polycarbonatfolie vergossen, die anschließend in Längsrichtung (Gießrichtung) mit einem Lösungsmittelrestgehalt von 5,4 % (VDE 0345) bei 180°C (I) bzw. 220°C (II) als höchster Reckwalzentemperatur ($T_R$) bei einem Verhältnis von Einlauf- zu Auslaufgeschwindigkeit von $V_1 : V_2$ = 1 : 1,5 verstreckt wird. Die entsprechend DIN 53 455 (200 mm/min Vorschub) gemessenen mechanischen Eigenschaften der erhaltenen ca. 100 µm dicken gereckten leitfähigen Polycarbonatfolien sind in Tabelle 3 angegeben, wobei die Dehnungswerte mehr als dreimal größer sind als bei einer ungereckten 100 µm dicken Folie gleicher Zusammensetzung.

Bei höherer Recktemperatur wird somit ein geringerer Anstieg des spezifischen Oberflächenwiderstandes festgestellt, d. h. durch Variation der Recktemperatur kann der Oberflächenwiderstand ebenfalls gezielt eingestellt werden.

**Tabelle 3**

Eigenschaften gereckter rußgefüllter Polycarbonatfilme (Dicke ca. 100 µm) - hergestellt aus Polycarbonatfilmen mit einer Anfangsdicke von 150 µm im Vergleich zu einer 100 µm Gießfolie.

| | I | II | Vergleich nicht ver- streckte Gießfolie |
|---|---|---|---|
| Recktemperatur (°C) | 180 | 220 | |
| Reckverhältnis ($V_1 : V_2$) | 1 : 1,5 | 1 : 1,5 | |
| Probendicke (µm) | 98 - 100 | 97 - 100 | 100 - 103 |
| Reißdehnung (%) | 64 | 61 | 20 |
| Reißfestigkeit (N/mm²) | 84,3 | 81,1 | 65,8 |
| Oberflächenwiderstand (Ω/sq; FPP 5000 der Fa. VEECO bei 20 - 25°C) | 220 | 170 | 98 |

**Beispiel 4**

Eine 16 µm dicke elektrisch leitfähige Polycarbonatfolie aus dem Copolycarbonat des Beispiels 1, aber mit η rel 2,18, die einen Rußfüllungsgrad von 28 Gew.-% (Leitfähigkeitsruß des Beispiels 1) aufweist und durch Vergießen einer feinstdispergierten Ruß/Polycarbonat/Methylenchlorid-Dispersion nach vorhergehender Filtration über 50 µm Gewebe hergestellt wird, wird mit einem Methylenchlorid-Restgehalt von 1,5 Gew.-% (Gewichtsverlust 1/2 h/160°C) auf einer Hofmann und Schwabe Reckmaschine mit drei Walzen bei einer Recktemperatur von 220°C und einem Reckverhältnis von 1 : 2,0 in einer Einspaltreckung monoaxial verstreckt. Die erfindungsgemäß erhältliche Folie mit einer Filmdicke von 7,8 - 8,3 µm zeigt in einem Zugversuch nach DIN 53 455 bei einer Vorschubgeschwindigkeit von 200 mm/min ausgezeichnete mechanische Festigkeiten von 32 % Reißdehnung und 104,7 N/mm² Reißfestigkeit. Der Restlösungsmittelgehalt ist nach dem Reckprozess auf weniger als 0,3 % (Gewichtsverlust nach VDE 0345) herabgesetzt. Der Oberflächenwiderstand (Vierpunktmessung-VEECO) der gereckten Polycarbonatfolie beträgt 6560 Ω/sq; was einem spezifischen Durchgangswiderstand von ca. 5 Ω cm entspricht.

**Vergleichsbeispiel A**

Eine zum Vergleich hergestellte elektrisch leitfähige ungereckte Polycarbonatfolie aus der Ruß/Polycarbonat-Dispersion gleicher Zusammensetzung und mit vergleichbarer Dicke weist wesentlich geringere Festigkeiten auf:
Eine ca. 8,5 - 9 µm dicke elektrisch leitfähige Polycarbonatfolie wird nach dem Gießverfahren in der gleichen Zusammensetzung und unter gleichen Bedingungen - wie unter Beispiel 4 aufgeführt - hergestellt. Die Folienbahn wird vorgetrocknet, um einen vergleichbaren Lösungsmittelrestgehalt von unter 0,5 Gew.-% (VDE 0345) zu erhalten. Nach DIN 53 455 (200 mm/min Vorschub) werden für diese ungereckte leitfähige Polycarbonatfolie 22 % Reißdehnung und 69,6 N/mm² als Reißfestigkeit und somit erheblich geringere Werte als in Beispiel 4 gemessen.

In diesem Zusammenhang wird auch festgestellt, daß die Herstellung von elektrisch leitfähigen Polycarbonat-Gießfolien mit Gehalten von z. B. über 20 Gew.-% an Leitruß wegen häufiger Abrisse der Folienbahnen im Dickenbereich unter 10 μm technisch kaum noch durchführbar ist.

**Beispiel 5**

Die nach Vergleichsbeispiel A hergestellte rußgefüllte Polycarbonat-Folie mit einer mittleren Dicke von ca. 9 μm (Rußgehalt ca. 27 Gew.-% des Rußes, wie in Bsp. 1 charakterisiert) wird ohne Vortrocknung mit einem Methylenchloridrestgehalt von 1,2 % (Gewichtsverlust 1/2 h / 160°C) in einer Einspaltreckung unter folgenden Bedingungen zu elektrisch leitfähigen Polycarbonatfolien mit einer Dicke von 6 μm (I) bzw. 4 μm (II) verstreckt, welche hohe mechanische Festigkeiten aufweisen. Der Anstieg des Oberflächenwiderstandes bei höherem Reckverhältnis ist in der Tabelle angegeben.

**Tabelle 4**

|  | I | II |
|---|---|---|
| Recktemperatur (°C) | 220 | 220 |
| Reckverhältnis ($V_1 : V_2$) | 1 : 1,5 | 1 : 2,0 |
| mittl. Filmdicke (μm) | 5,8 - 6,2 | 3,6 - 4,0 |
| Reißdehnung (%) | 36 | 24 |
| Reißfestigkeit (N/mm²) | 96 | 141,7 |
| Oberflächenwiderstand (Ω /sq; Vierpunktmessung, FPP 5000 der Fa. VEECO bei 20 - 25°C) | 3800 | 55000 |

Diese sehr dünnen elektrisch leitfähigen Polycarbonatfolien zeichnen sich durch hohe Oberflächenglätte aus und sind in diesem Dickenbereich mit Rußgehalten von z. B. über 20 Gew.-% nach einem Gieß-, Extrusions- oder Blasverfahren nicht mehr herstellbar.

**Beispiel 6**

Ein Leitfähigkeitsruß mit einer BET-Oberfläche von 1000 m²/g und einer DBP-Adsorption von 400 ml/100g wird in einer Bisphenol A / Bisphenol Z-Copolycarbonat Methylenchlorid-Lösung feinstdispergiert, wobei der Gehalt des elektrisch leitfähigen Rußes - bezogen auf den Gesamtfeststoffgehalt - 10 Gew.-% beträgt. Als Polycarbonat dient das des Beispiels 1, aber mit einem $\eta$ rel von 2,20 (5 g/l $CH_2Cl_2$ bei 25°C gemessen in einem Ubbelohde-Viskosimeter mit einem Kapillardurchmesser von 0,3 mm). Die erhaltene Dispersion wird nach Filtration mit einer Viskosität von 10 500 mpas (bei 20°C) zu rußgefüllten Polycarbonatfilmen mit einer Dicke von 45 μm (I) und 30 μm (II) vergossen.

Der rußgefüllte 45 μm dicke Polycarbonatfilm (I) wird in einer Einspaltreckung bei einem Verhältnis der Einlauf-($V_1$) zur Auslaufgeschwindigkeit ($V_2$) von 1 : 1,5 und einer Recktemperatur von 220°C zu einer ca. 30 μm dicken Folie in Längsrichtung verstreckt. Nach DIN 53 455 (200 mm/min Vorschubgeschwindigkeit) werden in einem Zugversuch für den erfindungsgemäß gereckten Polycarbonatfilm im Vergleich zu dem ungereckten Film (II) der gleichen Dicke von ca. 30 μm erheblich verbesserte Reißdehnungen und -festigkeiten festgestellt. Der Oberflächenwiderstand des Polycarbonatfilms beträgt nach dem Reckprozeß 2100 Ω /sq (VEECO-Vierpunktmessung) im Vergleich zu 1350 Ω/sq der ungereckten Folie (II).

**Beispiel 7**

Entsprechend den im Beispiel 6 angegebenen Bedingungen wird ein elektrisch leitfähiger Polycarbonatfilm mit einem Rußgehalt von 30 Gew.-% der gleichen Art wie Beispiel 6 in einer Dicke von 40 μm hergestellt, der einen Oberflächenwiderstand von 55 Ω/sq bei Raumtemperatur und einen Restlösungsmittelgehalt (Gewichtsverlust nach VDE 0345) von 1,8 Gew.-% zeigt.

Dieser Film wird auf einer Hofmann und Schwabe Reckmaschine mit einem Verhältnis von $V_1 : V_2 = 1 : 1,33$

bei einer Temperatur von 220°C der mittleren Reckwalze (Recktemperatur) in einer Einspaltreckung zu einem erfindungsgemäßen Polycarbonatfilm von ca. 30 µm verstreckt, der dann einen spezifischen Oberflächenwiderstand von 86 Ω/sq besitzt, und der gegenüber einer ungereckten 30 µm Polycarbonatfolie - hergestellt aus der gleichen Dispersion und somit bei gleichem Rußfüllungsgrad - mit einer Reißfestigkeit von größer als 60 N/mm$^2$ und einer Reißdehnung von über 20 % wesentlich verbesserte mechanische Festigkeiten aufweist (Zugversuch entsprechend DIN 53 455; 200 mm/min Vorschub).

**Beispiel 8**

Entsprechend den in Beispiel 3 aufgeführten Bedingungen wird ein elektrisch leitfähiger Polycarbonatgießfilm mit 30 µm Dicke hergestellt, der einen Rußgehalt von 15 Gew.-% feinstverteilt enthält, wobei dieser Leitfähigkeitsruß eine ausgeprägte Struktur, d. h. kettenförmige Anordnung der Primärteilchen, eine mittlere Teilchengröße von 35 Nanometer (nm) und eine BET-Oberfläche von 70 m$^2$/g aufweist. Dieser Film aus Bisphenol A-Homopolycarbonat ($\bar{M}_w$ ca. 180 000; η rel 2,21) wird mit einem Restmethylenchloridgehalt von 1,5 Gew.-% (VDE 0345) in einer Einspaltreckung bei 210°C und einem Reckverhältnis von 1 : 1,5 zu einem Film mit einer mittleren Dicke von 20 µm verstreckt.

Der Oberflächenwiderstand des gereckten leitfähigen Polycarbonat-Films beträgt 3400 Ω /sq und die mechanischen Festigkeiten sind mit Werten von größer als 75 % Reißdehnung und mehr als 80 N/mm$^2$ Reißfestigkeit gegenüber einem ungereckten 20 µm dicken Vergleichsfilm gleicher Zusammmensetzung wesentlich verbessert (Zugversuch entsprechend DIN 53 455).

**Beispiel 9**

Ein Elektrodengraphitpulver mit einer Kornverteilung bis 0,4 mm Teilchendurchmesser wird in einer Lösung des in Beispiel 6 aufgeführten Copolycarbonats (Ω rel = 2,20; Bisphenol A-Basis mit 0,5 Mol-% Bisphenol Z) in Methylenchlorid mit einem Gehalt von 40 Gew.-%, bezogen auf den Gesamtfeststoff, feinstdispergiert, und nach Filtration über ein 50 µm Polyamidgewebe wird die Dispersion zu einem Film mit einer mittleren Dicke von 20 µm, der einen Oberflächenwiderstand von 11 600 Ω /sq aufweist, vergossen. Durch Längsreckung bei einer Temperatur von 220°C und einem Reckverhältnis $V_1 : V_2$ von 1 : 1,33 wird ein Widerstandsfilm mit einem Oberflächenwiderstand von 18200 Ω/sq und einer mittleren Dicke von 15 µm erhalten, der gegenüber einem unverstreckten Vergleichsfilm gleicher Zusammensetzung und Dicke erheblich gesteigerte mechanische Festigkeiten in einem Zugversuch nach DIN 53 455 aufweist.

**Patentansprüche**

1. Verfahren zur Herstellung von Polycarbonatfolien mit einer Dicke von 0,002 mm bis 0,4 mm mit einem Gehalt an Ruß oder Graphit von 10 bis 40 Gew.-%, dadurch gekennzeichnet, daß man in Lösungen von thermoplastischen aromatischen Polycarbonaten mit $\bar{M}w$ (Gewichtsmittelmolekulargewicht) von 20 000 bis 300 000 entsprechende Mengen an Ruß oder Graphit dispergiert und in bekannter Weise Gießfolien einer Dicke von 0,004 mm bis 0,42 mm herstellt und diese danach mono-oder biaxial um mindestens 5 % bis maximal 250 % nach bekannten Verfahren reckt.

2. Polycarbonatfolien, erhältlich nach dem Verfahren des Anspruchs 1.

3. Verwendung der Polycarbonatfolien des Anspruchs 2 auf dem Elektrosektor.

**Claims**

1. A process for the production of 0.002 mm to 0.4 mm thick polycarbonate films containing from 10 to 40 % by weight carbon black or graphite, characterized in that corresponding quantities of carbon black or graphite are dispersed in solutions of thermoplastic aromatic polycarbonates having $\bar{M}w$ values (weight-average molecular weight) of from 20,000 to 300,000, cast films from 0.004 to 0.42 mm in thickness are prepared in known manner and are then monoaxially or biaxially stretched in known manner by at least 5 % to at most 250 %.

2. Polycarbonate films obtainable by the process claimed in claim 1.

3. The use of the polycarbonate films claimed in claim 2 in the electrical field.

# EP 0 141 310 B1

**Revendications**

1. Procéde pour la fabrication de feuilles de polycarbonates d'une épaisseur de 0,002 à 0,4 mm et d'une teneur en noir de fumée ou en graphite de 10 à 40 % en poids, caractérisé en ce que l'on disperse les quantités correspondantes de noir de fumée ou de graphite dans des solutions de polycarbonates aromatiques thermoplastiques de poids moléculaire moyen en poids $\bar{M}w$ de 20 000 à 300 000 et on fabrique de manière connue des feuilles coulées d'une épaisseur de 0,004 à 0,42 mm et on soumet ensuite celles-ci à un étirage mono- ou biaxial d'au moins 5 % jusqu'à un maximum de 250 % par des procédes connus.

2. Feuilles de polycarbonates que l'on peut obtenir par le procédé selon la revendication 1.

3. Utilisation des feuilles de polycarbonates selon la revendication 2, dans le domaine électrique.

9